# EUROPÄISCHE PATENTSCHRIFT

(11) **EP 3 760 027 B1**
(45) Veröffentlichungstag und Bekanntmachung des Hinweises auf die Patenterteilung: **23.03.2022**
(21) Anmeldenummer: 20172974.6
(22) Anmeldetag: 05.05.2020
(51) Int. Cl.: A01D 41/127, A01D 69/00

(54) **ANTRIEBSSYSTEM FÜR EINE ERNTEMASCHINE**
DRIVE SYSTEM FOR A HARVESTER
SYSTÈME D'ENTRAÎNEMENT POUR UNE MACHINE DE RÉCOLTE

(30) Priorität: 10.05.2019 DE 102019206829
(43) Veröffentlichungstag der Anmeldung: 06.01.2021
(73) Patentinhaber: Deere & Company, Moline, IL 61265 (US)
(72) Erfinder: MUENCH, Philipp, 68163 Mannheim (DE); CONSTANTINI, Giuliano, 68163 Mannheim (DE); HINSBERGER, Timo, 68163 Mannheim (DE)
(74) Vertreter: Stein, Stefan

(56) Entgegenhaltungen:
- EP-A1- 1 243 173
- EP-A1- 1 243 174
- EP-A1- 1 680 952
- EP-A1- 2 921 042
- EP-A1- 2 995 191
- EP-A2- 2 057 880

## Beschreibung

Die Erfindung betrifft eine Erntemaschine, umfassend:
einen Antriebsmotor, der über einen ersten Antriebsstrang mit Bodeneingriffsmitteln der Erntemaschine und über einen zweiten Antriebsstrang mit Erntegutbearbeitungs- und/oder -fördermitteln der Erntemaschine verbunden ist, und
eine Steuerung, die zur Kontrolle der Vortriebsgeschwindigkeit der Erntemaschine mit einem zur Verstellung des Übersetzungsverhältnisses des ersten Antriebsstrangs eingerichteten Aktor verbunden ist,
wobei der Steuerung vom Erntegutdurchsatz der Erntemaschine abhängige Soll- und Istwerte zuführbar sind, basierend auf denen sie eingerichtet ist, den Aktor im Sinne eines Minimierens des Unterschieds zwischen dem jeweiligen Soll- und Istwert anzusteuern.

### Technologischer Hintergrund

Landwirtschaftliche Erntemaschinen dienen zur Ernte von Pflanzen von einem Feld. In der Erntemaschine finden in der Regel Verarbeitungsprozesse statt, um das Erntegut zwecks späterer Weiterverarbeitung zu behandeln. So wird das Erntegut in einem Feldhäcksler gehäckselt und in einem Mähdrescher gedroschen, getrennt und gereinigt. Der Antrieb der Erntemaschine erfolgt durch einen Antriebsmotor, bei dem es sich üblicherweise um einen (Diesel-) Verbrennungsmotor handelt. Der Antriebsmotor treibt über einen ersten Antriebsstrang die Bodeneingriffsmittel (Räder oder Raupenlaufwerke) der Erntemaschine und über einen zweiten Antriebsstrang die Erntegutbearbeitungs- und/oder-fördermittel der Erntemaschine an.

Um sicherzustellen, dass eine zumindest etwa optimale Auslastung der Erntemaschine erzielt wird, wurde vorgeschlagen, eine für den jeweiligen Erntegutdurchsatz repräsentative Messgröße zu erfassen und die Vortriebsgeschwindigkeit der Erntemaschine durch Variation des Übersetzungsverhältnisses des ersten Antriebsstranges im Sinne einer Einhaltung eines gewünschten Erntegutdurchsatzes zu kontrollieren.

Hierzu sei auf die EP 1 243 173 A1 verwiesen, die einen Mähdrescher mit einem hydrostatischen ersten Antriebsstrang beschreibt. Der jeweilige Durchsatz wird anhand des Antriebsmoments eines Axialdresch- und Trennrotors erfasst und die Vortriebsgeschwindigkeit durch eine Steuerung selbsttätig derart angesteuert, dass das Antriebsmoment einem vorgegebenen Wert entspricht. Dieser vorgegebene Wert wird durch einen Bediener eingegeben (kalibriert), indem er eine gewünschte Verlustrate auswählt. Weiterhin kann die Feuchtigkeit des Ernteguts erfasst und bei der Einstellung der Vortriebsgeschwindigkeit berücksichtigt werden, d.h. der Mähdrescher fährt bei feuchtem (und somit schwerer zu verarbeitendem) Erntegut langsamer als bei trockenem Erntegut. Die Drehzahl des Antriebsmotors wird hierbei nicht durch die Steuerung kontrolliert, sondern entspricht einem durch den Bediener vorgebbaren Wert, der sich abhängig von der Belastung ändern kann.

Es wurde bei einer ähnlichen Anordnung vorgeschlagen, dass der Bediener eine gewünschte Erntegutaufnahmerate eingibt und die Steuerung die Vortriebsgeschwindigkeit im Sinne des Einhaltens eines gewünschten Durchsatzes kontrolliert (EP 2 057 880 A2).

Die EP 2 921 042 A1 schlägt ein vorausschauende Geschwindigkeitssteuerung einer Erntemaschine vor, bei der anhand des zu erwartenden Durchsatzes eine Vorplanung der anzusteuernden Geschwindigkeit der Erntemaschine erfolgt. Anhand der geplanten Geschwindigkeiten werden die durchzuführenden Beschleunigungen oder Verzögerungen errechnet und mit bestimmten Grenzwerten verglichen, die den Fahrerkomfort sicherstellen sollen. Nötigenfalls wird der geplante Geschwindigkeitsverlauf umgeplant. Ein Eingriff der Steuerung in den Arbeitspunkt des Antriebsmotors ist nicht vorgesehen.

Die EP 2 832 205 A1 schlägt vor, dass der Bediener nicht nur einen gewünschten Durchsatz (bzw. die Leistung des Antriebsmotors), sondern auch einen Arbeitspunkt des Antriebsmotors vorgeben kann. Die Steuerung kontrolliert somit nicht nur die Vortriebsgeschwindigkeit im Sinne eines Einhaltens des gewünschten Durchsatzes oder der gewünschten Leistung des Antriebsmotors, sondern auch den Arbeitspunkt des Antriebsmotors, um beide Vorgaben einzuhalten.

In der EP 3 326 446 A1 wird hingegen vorgeschlagen, die Geschwindigkeit der Erntemaschine selbsttätig derart zu verstellen, dass der Antriebsmotor mit einer vorgegebenen Leistung betrieben wird. Hierzu ist eine innere Regelschleife für die Vortriebsgeschwindigkeit vorgesehen, der ein Sollwert und ein Istwert für eine durchsatzabhängige Größe zugeführt wird. Eine äußere Regelschleife dient zur Bereitstellung des Sollwerts der durchsatzabhängigen Größe für die innere Regelschleife und erhält als Eingangsgrößen Soll- und Istwerte für die Leistung des Antriebsmotors, während der Istwert der durchsatzabhängigen Größe mittels eines Sensors erfasst wird. Der Betriebspunkt des Antriebsmotors kann hier von der vorgegebenen Leistung abhängen oder davon unabhängig sein, insbesondere bei isochronem Betrieb des Antriebsmotors.

### Aufgabe

Im Stand der Technik finden sich nach alledem unterschiedliche Antriebssysteme für Erntemaschinen, die gemeinsam haben, dass die Vortriebsgeschwindigkeit im Sinne eines Einhaltens eines gewünschten Durchsatzes und/oder einer gewünschten Leistung des Antriebsmotors kontrolliert wird. Hierfür findet ein Vergleich zwischen einem gemessenen Durchsatz bzw. einer gemessenen Leistung und einem zugehörigen Sollwert statt, basierend auf dem die Vortriebsgeschwindigkeit kontrolliert wird, d.h. eine Regelschleife für die Geschwindigkeitskontrolle erhält als Soll- und Istwerte gemessene bzw. vorgegebene Werte für den Durchsatz oder die Leistung und gibt Stellsignale für einen Aktor zur Beeinflussung der Geschwindigkeit aus. Die Eingangsgröße für eine Geschwindigkeitsregelung, die üblicherweise eine weitere (innere) Regelschleife enthält, ist demnach die Geschwindigkeit. Diese Vorgehensweise hat unter anderem den Nachteil, dass eine Begrenzung der Beschleunigung zur Verbesserung des Fahrerkomforts nur bei vorausschauenden Durchsatzsensoren möglich ist und umständlich durch Umplanung eines Geschwindigkeitsverlaufs erfolgt (s. EP 2 921 042 A1). Zudem haben diese Regelungen, insofern sie mit PID-Reglern ausgestattet sind, die das Steuersignal u.a. anhand eines Integrals der Differenz zwischen Soll- und Istwert bestimmen, den Nachteil, dass sich die Integralwerte hochintegrieren, wenn beispielsweise der Sollwert aufgrund zu kleiner Bestandsdichten nicht erreicht werden kann, was dann zu unrichtigen Regelsignalen führt, wenn anschließend der Sollwert wieder erreicht werden kann, die Regelung jedoch versucht, durch zu hohe Geschwindigkeiten den Integralwert wieder abzubauen. Zur Vermeidung dieser Fehler sind weitere Maßnahmen erforderlich (anti-windup strategies).

Die der Erfindung zu Grunde liegende Aufgabe wird darin gesehen, ein gegenüber dem Stand der Technik verbessertes Antriebssystem für eine Erntemaschine bereitzustellen.

### Erfindung

Die vorliegende Erfindung wird durch die Patentansprüche definiert.

Eine Erntemaschine umfasst einen Antriebsmotor, der über einen ersten Antriebsstrang mit Bodeneingriffsmitteln der Erntemaschine und über einen zweiten Antriebsstrang mit Erntegutbearbeitungs- und/oder-fördermitteln der Erntemaschine verbunden ist, und eine Steuerung, die mit einem Aktor zur Kontrolle der Vortriebsgeschwindigkeit der Erntemaschine verbunden ist. Der Steuerung werden vom Erntegutdurchsatz abhängige Soll- und Istwerte geführt, anhand welcher sie ein Beschleunigungssignal berechnet, das eine zum Minimieren des Unterschieds zwischen Soll- und Istwert geeignete Beschleunigung der Erntemaschine repräsentiert, und basierend auf dem Beschleunigungssignal ein Stellsignal zur Ansteuerung des Aktors bestimmt.

Mit anderen Worten ermittelt die Steuerung ein Beschleunigungssignal anhand des Unterschieds zwischen einem Sollwert und einem Istwert, die beide direkt (z.B. als Sensorwert eines den Durchsatz repräsentierenden Größe erfassenden Sensors, beispielsweise zur Erfassung eines Antriebsmoments eines Erntegutbearbeitungs- und/oder-fördermittels der Erntemaschine oder eine Erntegutmattendicke) oder indirekt, z.B. über die Drehzahl und/oder Leistung des Antriebsmotors, vom Erntegutdurchsatz abhängen oder diesen repräsentieren. Dieses Beschleunigungssignal repräsentiert nicht, wie im Stand der Technik, einen Fehler in der Geschwindigkeit bzw. eine zur Minimierung des Beschleunigungssignals einzustellende Geschwindigkeitsänderung, sondern eine Beschleunigung der Erntemaschine, die sich zur Minimierung des Beschleunigungssignals (auf einen an Null angenäherten Wert) eignet. Anhand des Beschleunigungssignals wird schließlich (durch Integration) ein Stellsignal für den Aktor ermittelt, das vorzugsweise durch eine durch einen Bediener vorgebbare maximale Geschwindigkeit der Erntemaschine begrenzbar ist.

Auf diese Weise vermeidet man die Nachteile des Standes der Technik, denn das Beschleunigungssignal kann unproblematisch auf obere und untere Grenzwerte, die einer maximalen (positiven) und minimalen (negativen) Beschleunigung entsprechen und fest vorgegeben oder veränderbar sind, begrenzt werden, um den Bedienerkomfort zu verbessern. Auch vermeidet man die Fehler, die sich im Stand der Technik bei der Regelung der Geschwindigkeit mit einer Regelung mit Integralanteil ergeben, denn man benötigt vorliegend, da ein Beschleunigungssignal erzeugt wird, den Integralanteil nicht notwendigerweise.

Die Steuerung kann betreibbar sein, ein erstes Beschleunigungssignal hinsichtlich der Leistung des Antriebsmotors und ein zweites Beschleunigungssignal hinsichtlich der Drehzahl des Antriebsmotors zu berechnen und beide Beschleunigungssignale insbesondere additiv zu einem einzigen Beschleunigungssignal zu kombinieren.

Die Steuerung kann betreibbar sein, das Beschleunigungssignal anhand der Differenz unterer und oberer Grenzwerte für die Leistung und/oder Drehzahl des Antriebsmotors zu normieren. Diese Grenzwerte sind üblicherweise für die Erntemaschine fest vorgegeben.

Die Steuerung kann betreibbar sein, das erste und/oder zweite Beschleunigungssignal vor der Kombination mit dem anderen Beschleunigungssignal anhand einer vom Beschleunigungssignal abhängigen Kurve, die insbesondere logarithmisch oder exponentiell vom Betrag des Beschleunigungssignals abhängen kann, umzuformen, um das betroffene Beschleunigungssignal stärker oder schwächer als das andere Beschleunigungssignal zu wichten. Diese Wichtung könnte auch durch eine einfache gewichtete Summe erfolgen, die allerdings zu einem "unglatten" Verhalten (wegen des Abschneidens zur Begrenzung der Beschleunigung) führen würde. Die besagten Kurven sollen somit einen glatten Übergang bereitstellen.

Der Sollwert für die Leistung und/oder Drehzahl des Antriebsmotors kann mittels einer Bedienerschnittstelle und/oder durch eine Automatik vorgebbar sein.

Die Steuerung kann eine Überwachungseinrichtung umfassen, welche betreibbar ist, im Falle einer erkannten, sich kurzfristig einstellenden Unter- oder Überlast des Antriebsmotors dem Beschleunigungssignal korrigierende Signale zu überlagern. Ein derartiges, korrigierendes Signal kann einerseits von der Zeitableitung des Beschleunigungssignals abhängen, andererseits kann ein korrigierendes Signal insbesondere abgegeben werden, falls die Leistung des Antriebsmotors über einer Schwelle von z.B. 95 % der Nennlast liegt und über eine Anzahl von Messpunkten ansteigt oder absinkt und die Drehzahl über einer bestimmten Schwelle in der Nähe der Minimal- oder Maximaldrehzahl liegt.

Die vorliegende Erfindung kann an Feldhäckslern oder beliebigen anderen Erntemaschinen, wie Mähdreschern, Baumwollpflückern oder Zuckerrohrernten verwendet werden. Die sich möglicherweise ändernden Drehzahlen des Antriebsmotors beeinflussen über den zweiten Antriebsstrang zwar auch die Drehzahlen der Erntegutbearbeitungs- und/oder-fördermittel der Erntemaschine, was innerhalb gewisser Grenzen jedoch hinnehmbar sein oder durch variable Übersetzungsverhältnisse im zweiten Antriebsstrang ausgeglichen werden kann (vgl. hierzu beispielsweise DE 196 32 977 A1 oder DE 10 2004 039 462 A1).

### Ausführungsbeispiel

Anhand der Abbildungen wird ein Ausführungsbeispiel der Erfindung erläutert. Es zeigen:
- Fig. 1: eine schematische seitliche Ansicht einer selbstfahrenden Erntemaschine in Form eines Feldhäckslers,
- Fig. 2: eine schematische Draufsicht auf das Antriebssystem der Erntemaschine,
- Fig. 3: ein Blockdiagramm einer Steuerung zur Kontrolle der Vortriebsgeschwindigkeit der Erntemaschine,
- Fig. 4: ein Diagramm einer Vorverarbeitungsschaltung der Steuerung,
- Fig. 5: ein Diagramm hinsichtlich des Faktors, mit dem die Vorverarbeitungsschaltung das zweite Beschleunigungssignal multipliziert,
- Fig. 6: ein Diagramm für die Signale der Überwachungseinrichtung,
- Fig. 7: ein beispielhaftes Kennlinienfeld des Antriebsmotors der Erntemaschine,
- Fig. 8: ein Diagramm für eine erste mögliche Vorgehensweise zum Auffinden eines Betriebspunkts des Antriebsmotors, und
- Fig. 9: ein Diagramm für eine zweite mögliche Vorgehensweise zum Auffinden eines Betriebspunkts des Antriebsmotors.

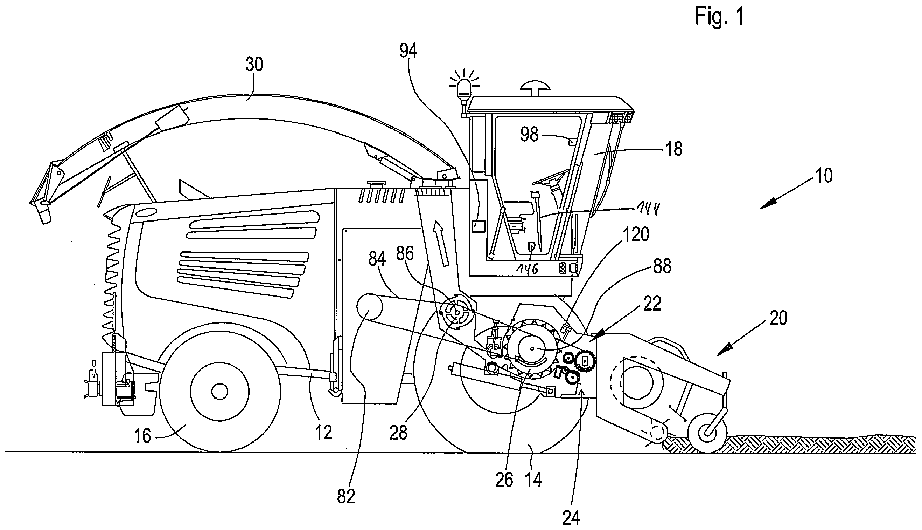

In der Figur 1 ist eine Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten, als Erntegutbearbeitungseinrichtung vorgesehenen Häckseltrommel 26 zugeführt, die es in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Auswurfkrümmer 30. Im Folgenden beziehen sich Richtungsangaben, wie seitlich, unten und oben, auf die Vorwärtsbewegungsrichtung V der Erntemaschine 10, die in der Figur 1 nach rechts verläuft.

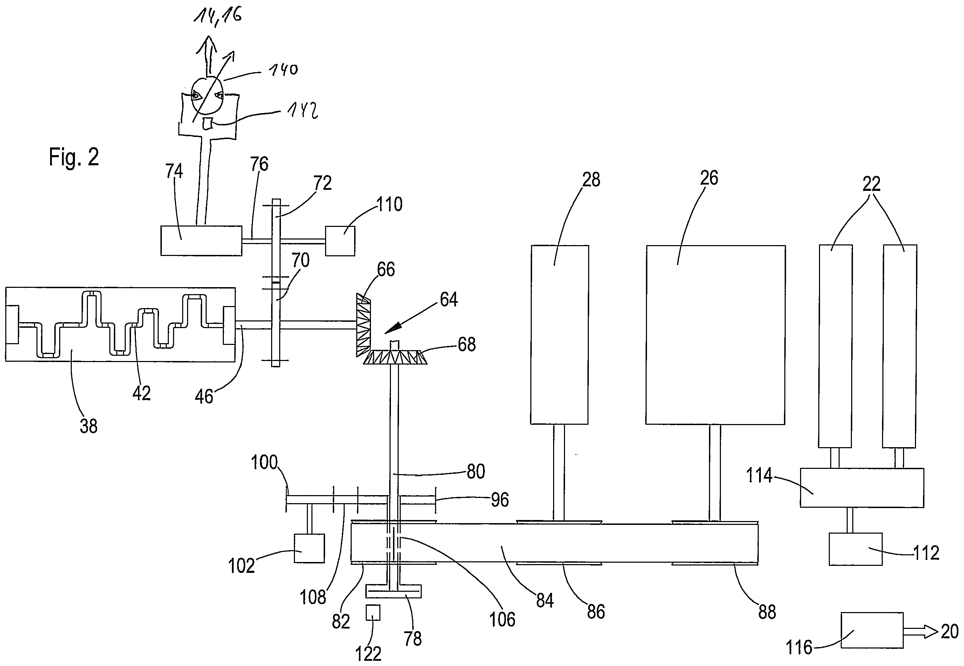

Die Figur 2 zeigt eine Draufsicht auf die Antriebsanordnung der Erntemaschine 10. Im rückwärtigen Bereich der Erntemaschine 10 befindet sich ein Antriebsmotor 38 insbesondere in Form eines Dieselmotors. Der Antriebsmotor 38 erstreckt sich in der Vorwärtsrichtung der Erntemaschine 10 und umfasst eine Kurbelwelle 42, die sich nach vorn aus dem Gehäuse des Antriebsmotors 38 heraus erstreckt. Der Antriebsmotor 38 treibt im Betrieb mit seiner Kurbelwelle 42 eine erste Längswelle 46 an, die mit dem ersten Kegelzahnrad 66 eines Winkelgetriebes 64 verbunden ist. Die erste Längswelle 46 treibt auch über Zahnräder 70, 72 und eine zweite Längswelle 76 ein Pumpenaggregat 74 an, das eine Hydropumpe zum Antrieb von Hydraulikmotoren 140 für den Vortrieb der Erntemaschine 10, eine Lenkpumpe und eine Hydropumpe zur Ölversorgung der Steuerung des hydrostatischen Antriebs für den Vortrieb der Erntemaschine 10 umfasst, und eine erste Hydropumpe 110, die zum Antrieb eines ersten Hydraulikmotors 112 zum Antrieb des Einzugsförderers 22 über ein Getriebe 114 dient. Es wäre auch denkbar, über eines der Zahnräder 70, 72 oder ein dazwischen angeordnetes Zahnrad (nicht gezeigt) weitere permanent angetriebene Elemente, wie einen elektrischen Generator und/oder einen Gebläseantrieb für die Kühlluftzufuhr für den Antriebsmotor 38 anzutreiben.

Das zweite Kegelzahnrad 68 des ersten Winkelgetriebes 64 ist mit einer Querwelle 80 verbunden, welche sich durch eine mit der Riemenscheibe 82 verbundene Hohlwelle 106 hindurch auf die von dem Winkelgetrieben 64 abgewandte Seite der Riemenscheibe 82 erstreckt und dort mit einer Kupplung 78 verbunden ist. Die Kupplung 78 ist ausgangsseitig mit der Hohlwelle 106 verbunden, die außerdem auf der dem Winkelgetriebe 64 zugewandten Seite der Riemenscheibe 82 über Zahnräder 96, 108 und 100 eine zweite Hydropumpe 102 antreibt, die zum Antrieb eines zweiten Hydraulikmotors 116 dient, der den Erntevorsatz 20 antreibt. Die Kupplung 78 ermöglicht es, den Treibriemen 84 und mit ihm die Häckseltrommel 26 und die Fördervorrichtung 28 ein- und auszuschalten.

Eine geeignete Steuerung 94 (s. Figur 1) ist mit einem Aktor 122 zum Schalten der Kupplung 78 verbunden. Im Straßenfahrbetrieb, der durch eine Bedienerschnittstelle 98 ausgewählt werden kann, veranlasst die Steuerung 94 den Aktor 122 die Kupplung 78 zu öffnen, während sie den Aktor 122 im Erntebetrieb veranlasst, die Kupplung 78 zu schließen. Weitere Details und mögliche Betriebsarten der Erntemaschine 10 werden in der DE 10 2014 219 205 A1 beschrieben.

Das Pumpenaggregat 74 bildet mit dem Hydromotor 140, der über weitere Antriebsmittel (Getriebe, Wellen, nicht gezeigt) mit den zum Vortrieb der Erntemaschine 10 dienenden Bodeneingriffsmitteln (Rädern 14 und/oder 16) antriebsverbunden ist, einen ersten Antriebsstrang, der durch den Antriebsmotor 38 angetrieben wird. Das Winkelgetriebe 64 und der Treibriemen 84 (wie auch die Hydropumpen 102 und 110 sowie die Hydromotoren 112, 116) bilden einen zweiten Antriebsstrang zum Antrieb von Erntegutbearbeitungs- und/oder -fördermitteln der Erntemaschine 10.

Die Steuerung 94 ist eingerichtet, einen elektromagnetisch oder hydraulisch über eine elektromagnetische Ventilanordnung betätigbaren Aktor 142 zu kommandieren, der das Schluckvolumen des Hydromotors 140 (und/oder einer verstellbaren Hydropumpe im Pumpenaggregat 74) verstellt, um das Übersetzungsverhältnis des ersten Antriebsstrangs und somit die Vorwärtsgeschwindigkeit V der Erntemaschine 10 zu variieren. Bei einer anderen Ausführungsform könnte die Steuerung 94 direkt die Geschwindigkeit eines Elektromotors zum Antrieb der Räder 14, 16 steuern. Die Steuerung 94 ist zudem mit einem Sensor 146 zur Erfassung der Position eines Fahrhebels 144 verbunden, mit welchem der Bediener eine gewünschte Vorwärtsgeschwindigkeit V der Erntemaschine 10 vorgeben kann.

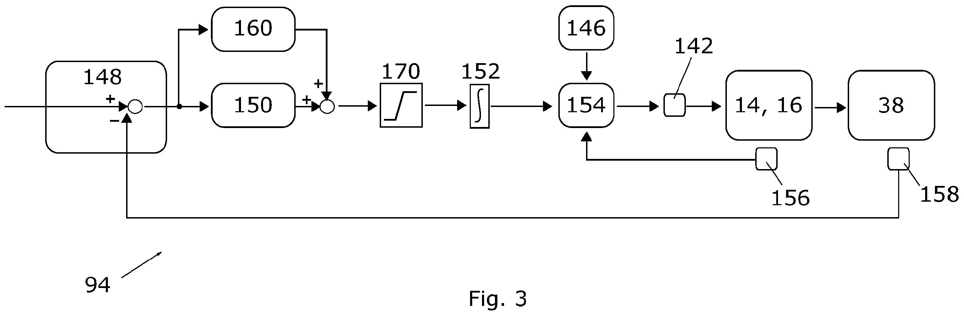

Die Figur 3 zeigt ein Schema der Steuerung 94. Sie umfasst eine Vorverarbeitungsschaltung 148, der Sollwerte hinsichtlich der Drehzahl und Leistung des Antriebsmotors 38 zugeführt werden, die mit der Bedienerschnittstelle 98 eingegeben oder ausgewählt werden können.

Zudem werden der Vorverarbeitungsschaltung 148 von einer Motorsteuerung 158 des Antriebsmotors 38 (oder einer anderen, geeigneten Sensorik) Istwerte hinsichtlich der Drehzahl und Leistung des Antriebsmotors 38 zugeführt. Anhand der Soll- und Istwerte berechnet die Vorverarbeitungsschaltung ein Beschleunigungssignal, das sie einer Regelschaltung 150 zuführt, die ein weiteres Eingangssignal von einer Überwachungseinrichtung 160 erhält, welche mit dem Ausgang der Vorverarbeitungsschaltung 148 verbunden ist. Am Ausgang der Regelschaltung 150 steht ein Beschleunigungssignal zur Verfügung, das eine Beschleunigung der Erntemaschine 10 repräsentiert. Diese Beschleunigung ist derart bemessen, dass sie zu einer Minimierung des Unterschieds zwischen Soll- und Istwerte der Drehzahl und Leistung des Antriebsmotors 38 führt. Das Beschleunigungssignal wird einem Integrator 152 zugeführt, der einen Sollwert für die Vortriebsgeschwindigkeit der Erntemaschine 10 ausgibt und einem Geschwindigkeitsregler 154 zuführt.

Der Geschwindigkeitsregler 154 kontrolliert den Aktor 142, der wiederum die Vortriebgeschwindigkeit V der Erntemaschine 10 vorgibt, im Sinne einer Minimierung des Unterschieds zwischen dem Sollwert der Vortriebsgeschwindigkeit V und einem mit einem Geschwindigkeitssensor 156 erfassten Istwert der Vortriebsgeschwindigkeit V, d.h. der besagte Unterschied wird möglichst nahe an Null gebracht. Anstelle einer Regelschleife mit Geschwindigkeitssensor 156 kann auch eine offene Schleife (ohne Rückkopplung durch den Geschwindigkeitssensor 156) verwendet werden, wenn der Geschwindigkeitsregler 154 den Zusammenhang zwischen Stellsignal an den Aktor 142 und Vorwärtsgeschwindigkeit der Erntemaschine 10 kennt. Das dem Geschwindigkeitsregler 154 vom Integrator zugeführte Signal kann insbesondere als Bruchteil einer maximalen Geschwindigkeit der Erntemaschine 10 zugeführt werden.

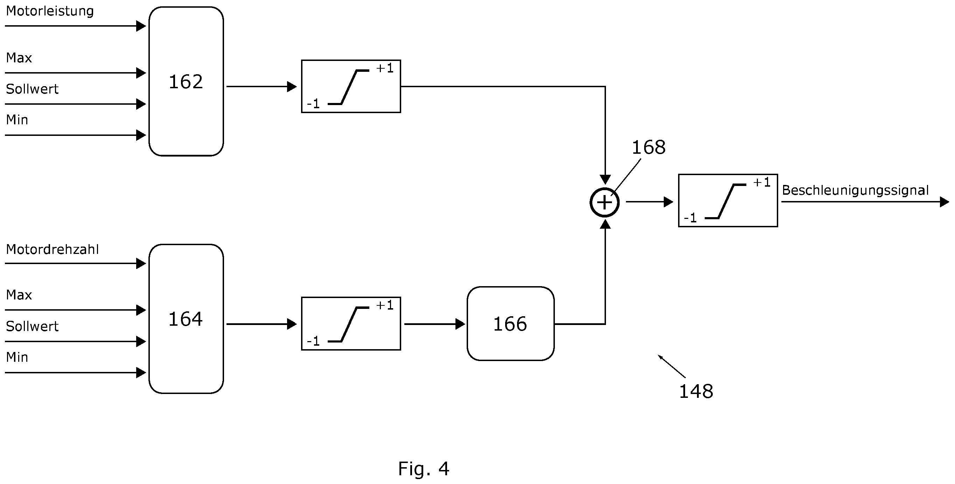

Die Figur 4 zeigt die Vorverarbeitungsschaltung 148 im Detail. Sie umfasst einen ersten Normierer 162, dem der Istwert der Leistung des Antriebsmotors 38 von der Motorsteuerung 158 zugeführt wird, sowie vom Bediener über die Bedienerschnittstelle 98 eingebbare Werte für einen Sollwert der Leistung des Antriebsmotors 38 sowie ein Maximum und ein Minimum für die Leistung des Antriebsmotors 38. Hierauf basierend wird ein erstes Beschleunigungssignal berechnet und an einen Addierer 168 gegeben. Das erste Beschleunigungssignal bewegt sich zwischen einer oberen Grenze (maximale Beschleunigung) und einer unteren Grenze (minimale, d.h. negative Beschleunigung = Verzögerung), die hier beispielhaft als Werte von +1 oder-1 angegeben werden. Das erste Beschleunigungssignal kann der Differenz zwischen dem Sollwert und dem Istwert der Leistung des Antriebsmotors 38 entsprechen, die zur Normierung durch die Differenz zwischen dem Maximum bzw. Minimum der Leistung geteilt wird.

Die Vorverarbeitungsschaltung 148 umfasst zudem einen zweiten Normierer 164, dem der Istwert der Drehzahl des Antriebsmotors 38 von der Motorsteuerung 158 zugeführt wird, sowie vom Bediener über die Bedienerschnittstelle 98 eingebbare (oder automatisch festlegbare, s. unten) Werte für einen Sollwert der Drehzahl des Antriebsmotors 38 sowie ein Maximum und ein Minimum für die Drehzahl des Antriebsmotors 38. Hierauf basierend wird ein zweites Beschleunigungssignal berechnet und (über einen Umformer 166) an den Addierer 168 gegeben. Das zweite Beschleunigungssignal bewegt sich zwischen einer oberen Grenze (maximale Beschleunigung) und einer unteren Grenze (minimale, d.h. negative Beschleunigung = Verzögerung), die hier beispielhaft als Werte von +1 oder -1 angegeben werden. Das zweite Beschleunigungssignal kann der Differenz zwischen dem Sollwert und dem Istwert der Drehzahl des Antriebsmotors 38 entsprechen, die zur Normierung durch die Differenz zwischen dem Maximum bzw. Minimum der Drehzahl geteilt wird.

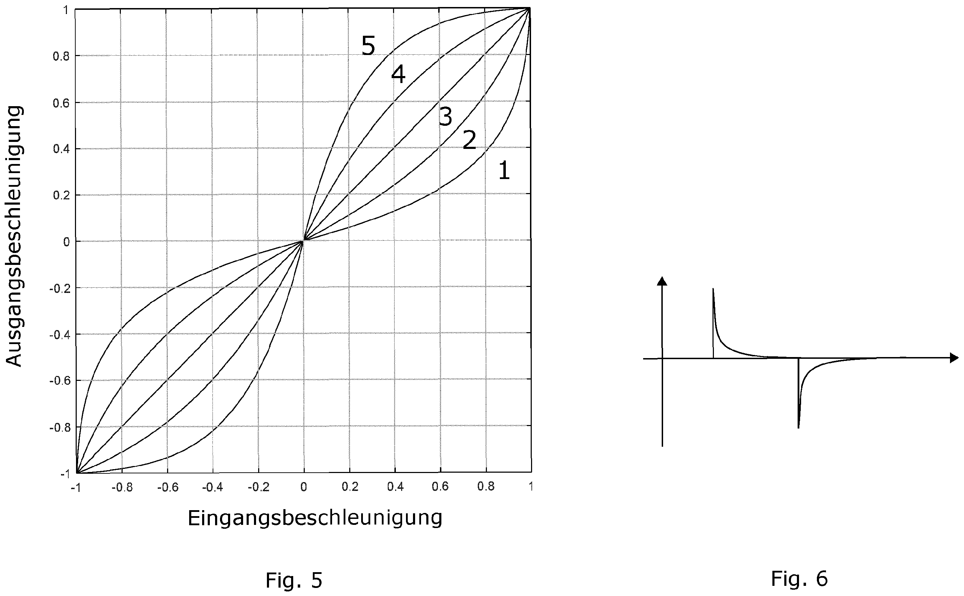

Der Umformer 166 dient dazu, das vom zweiten Normierer 164 abgegebene, zweite Beschleunigungssignal mit einem vom zweiten Beschleunigungssignal abhängigen Faktor zu multiplizieren, wie beispielhaft in der Figur 5 dargestellt ist. In der Figur 5 werden insgesamt 5 Kurven gezeigt, wobei der Eingangswert des Umformers 166 auf der X-Achse und sein Ausgangswert auf der Y-Achse eingezeichnet ist. Bei der Kurve 3 wird der Eingangswert mit 1 multipliziert, sodass Ein- und Ausgangswerte gleich sind. Die Kurven 1 und 2 sind für kleine Werte flacher als die Kurve 3 (und für Werte jenseits von ca. +/- 0,6 steiler als die Kurve 3. Die Kurven 1 und 2 können beispielsweise angenäherte Exponentialfunktionen mit unterschiedlichen Basen sein. Die Kurven 4 und 5 sind für kleine Werte steiler als die Kurve 3 und für Werte jenseits von ca. +/- 0,5 flacher als die Kurve 3. Die Kurven 4 und 5 können beispielsweise angenäherte Logarithmusfunktionen mit unterschiedlichen Basen sein. Für jede Kurve wird der Eingangswert 0 auf den Ausgangswert 0 abgebildet und die Eingangswerte +/- 1 auf die Ausgangswerte +/- 1. Die Kurven 1 bis 5 repräsentieren die Aggressivität, mit welcher die Vorverarbeitungsschaltung 148 auf die zweiten Beschleunigungssignale reagiert, die vom zweiten Normierer 164 abgegeben werden. Je höher die Nummer der Kurve, umso aggressiver wird auf das zweite Beschleunigungssignal reagiert, d.h. in umso höherem Maße wird auf eventuelle Abweichungen der Motordrehzahl vom Sollwert geantwortet, und umso höher ist die Wichtung des zweiten Beschleunigungssignals gegenüber dem ersten Beschleunigungssignal und umgekehrt.

Man könnte auch den Ausgang des ersten Normierers 162 mit einem weiteren Umformer verbinden, der gleichartig mit dem Umformer 166 ist und dieselbe oder eine andere der Kurven 1 bis 5 verwendet.

Dem Addierer 168 werden als Eingangswerte das erste Beschleunigungssignal vom ersten Normierer 162 und das zweite Beschleunigungssignal vom zweiten Normierer 164 nach Durchgang durch den Umformer 166 zugeführt. An seinem Ausgang steht das kombinierte, und weiterhin normierte Beschleunigungssignal für die Regelschaltung 150 zur Verfügung. Es werden somit das erste und zweite Beschleunigungssignal in einem einzigen Beschleunigungssignal verschmolzen, um durch die folgenden Reglerelemente zu erreichen, dass das kombinierte Beschleunigungssignal minimiert wird. Dadurch wird eine hohe Auslastung des Antriebsmotors 38 erreicht und im Falle einer Fehlanpassung (Über- oder Unterlastung) eine schnelle Reaktion ermöglicht.

Die Regelschaltung 150 kann ein Proportional-Differenzial-Regler sein, dem als Eingangswert das kombinierte Beschleunigungssignal der Vorverarbeitungsschaltung 148 zugeführt werden. Das Ausgangssignal der Regelschaltung 150 wird, nach Addition des Signals der Überwachungseinrichtung 160, dem Integrator 152 zugeführt. Man könnte den Ausgangswert der Regelschaltung 150 zusätzlich von einem zeitlich integrierten Eingangssignal abhängig machen, was in manchen Anwendungsfällen vorteilhaft sein, jedoch ggf. eine Rückstelllogik erforderlich machen kann.

Die Überwachungseinrichtung 160 überwacht die Leistung und die Drehzahl des Antriebsmotors 38, indem ihr das kombinierte Beschleunigungssignal von der Vorverarbeitungsschaltung 148 zugeführt wird. Bei dem Ausgangssignal der Überwachungseinrichtung 160 handelt es sich insbesondere um die erste Zeitableitung des kombinierten Beschleunigungssignals von der Vorverarbeitungsschaltung 148. Im Falle eines plötzlichen Drehzahlabfalls oder eines plötzlichen Anstiegs der Leistung des Antriebsmotors 38 gibt die Überwachungseinrichtung 168 ein negatives Signal an die Regelschaltung 150 ab, wie es in der Figur 6 rechts dargestellt ist. Im Falle eines plötzlichen Drehzahlanstiegs oder eines plötzlichen Absinkens der Leistung des Antriebsmotors 38 gibt die Überwachungseinrichtung 168 ein positives Signal an die Regelschaltung 150 ab, wie es in der Figur 6 links dargestellt ist.

Diese Signale können über die Zeit integrierte Rechtecksignale sein und bilden relativ große, exponentiell abfallende Impulse, die zur Vermeidung von Abwürgen oder zu hohen Drehzahlen des Antriebsmotors 38 bei Bestandsdichtenänderungen führen. Die Abgabe des positiven oder negativen Signals endet erst, wenn der Verbrennungsmotor 38 anfängt, sich von der unerwünschten Bedingung (Absinken oder Anstieg der Drehzahl und/oder Leistung) zu erholen. Alternativ oder zusätzlich kann ein korrigierendes (z.B. rechteckiges) Signal abgegeben werden, falls die Leistung des Antriebsmotors über einer Schwelle von z.B. 95 % der Nennlast liegt und über eine Anzahl von Messpunkten ansteigt oder absinkt und die Drehzahl über einer bestimmten Schwelle in der Nähe der Minimal- oder Maximaldrehzahl liegt.

Die Regelschaltung 150 oder ein zwischen ihr und dem Integrator 152 eingeschleifter Begrenzer 170 kann das Ausgangssignal der Regelschaltung 150, das die Beschleunigung der Erntemaschine 10 repräsentiert, auf vorgegebene oder durch den Bediener über die Bedienerschnittstelle 98 eingebbare Grenzen der negativen und positiven Beschleunigung, die gleich oder unterschiedlich sein können, normieren (und/oder die Grenzen überschreitende Ausgangssignale der Regelschaltung 150 einfach abschneiden), um dem Bediener nur innerhalb fest vorgegebener oder eingebbarer Grenzen liegenden Beschleunigungen beim Erntebetrieb auszusetzen. Zudem begrenzt der Geschwindigkeitsregler 154 die Vortriebsgeschwindigkeit V der Erntemaschine 10 auf dem vom Sensor 146 vorgegebenen Wert, d.h. er verwendet den niedrigeren Wert des Sensors 146 oder des Integrators 152. In diesem Zusammenhang sei noch angemerkt, dass der Fahrer eine maximale Geschwindigkeit der Erntemaschine 10 statt über den Fahrhebel 144 auch über die Bedienerschnittstelle 98 eingeben oder auswählen könnte. Der Fahrhebel 144 ist dann funktionslos oder dient zur Verringerung der Geschwindigkeit unter den mit der Bedienerschnittstelle 98 eingegebenen, maximalen Wert (wobei sein Verstellbereich an die maximale Geschwindigkeit angepasst werden kann).

Die Maximal- und Minimalwerte der Leistung und Drehzahl des Antriebsmotors 38, die in der Figur 4 von den Normierern 162 und 164 verwendet werden, können in der Steuerung 94 fest abgespeichert oder (vorzugsweise innerhalb gewisser, fest vorgegebener Grenzen) mittels der Bedienerschnittstelle 98 eingebbar sein. Die Sollwerte der Leistung und Drehzahl des Antriebsmotors 38, die in der Figur 4 von den Normierern 162 und 164 verwendet werden, können innerhalb gewisser, fest vorgegebener Grenzen, die insbesondere den Maximal- und Minimalwerten entsprechen, mittels der Bedienerschnittstelle 98 eingebbar sein oder durch eine übergeordnete Kontrollanordnung vorgegeben werden, die beispielsweise auf externen Vorgaben oder ökonomischen Erwägungen basieren könnte. Bei dem Sollwert der Leistung kann es sich um eine absolute Leistung für die jeweilige Drehzahl handeln, die in kW gemessen werden könnte (d.h. der Bediener wählt über die Bedienerschnittstelle 98 die Drehzahl aus und anschließend die Leistung, die auf einen ihm von der Bedienerschnittstelle 98 angegebenen, anhand der eingegebenen Drehzahl aus einer abgespeicherten Kennlinie des Antriebsmotors 38 ausgelesen wird), oder um eine relative Leistung, die einen (prozentualen) Anteil an einer bei der jeweiligen Drehzahl verfügbaren Antriebleistung definiert. Es kann somit beispielsweise vorgegeben werden, dass die Erntemaschine mit 80 % der verfügbaren Nenn-Antriebsleistung betrieben wird. Die Steuerung 94 gibt zumindest den Sollwert der Drehzahl des Antriebsmotors 38 und optional auch den Sollwert der Leistung an die Motorsteuerung 158 weiter, welche die Arbeitsparameter des Antriebsmotors 38 (Einspritzpumpeneinstellung und dgl.) entsprechend kontrolliert.

Bei den vorhergehenden Ausführungen wird davon ausgegangen, dass der Bediener oder die übergeordnete Kontrollanordnung nicht nur die Soll-Leistung des Antriebsmotors, sondern auch dessen Soll-Drehzahl auswählen soll. Die Vorgabe der Drehzahl birgt jedoch gewisse Probleme, da insbesondere unerfahrene Bediener verleitet sein können, zu niedrige und somit bei Bestandsdichtenänderungen zum Abwürgen des Antriebsmotors führende Drehzahlen oder zu hohe und wirkungsgradungünstige Drehzahlen auszuwählen. Im Folgenden wird daher eine mögliche automatische Vorgehensweise beschrieben, eine geeignete Soll-Drehzahl des Antriebsmotors vorzugeben.

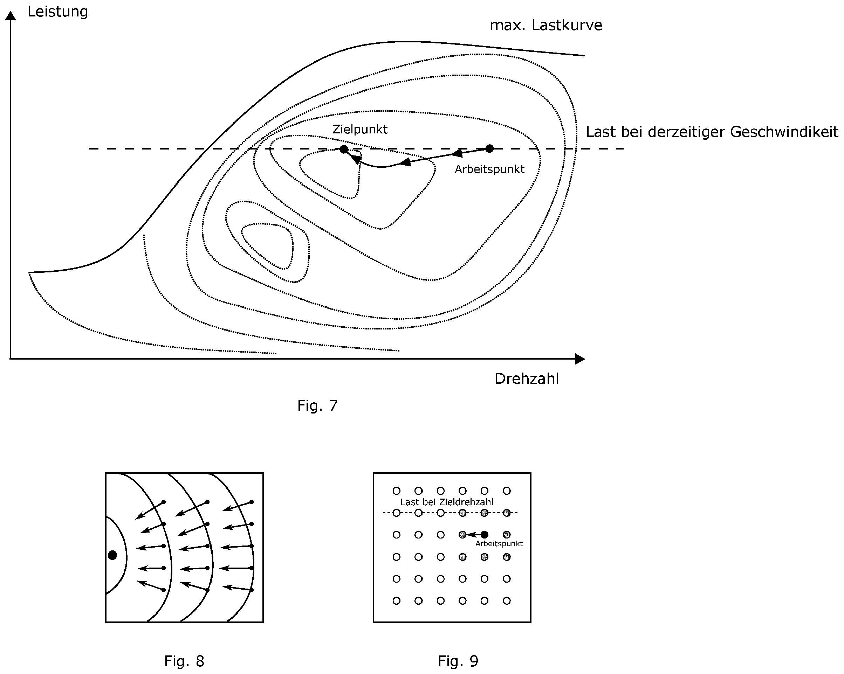

Das Ziel hierbei ist, den Kraftstoffverbrauch möglichst gering zu halten, die Erntemaschine 10 jedoch mit einer gewünschten Vortriebsgeschwindigkeit V über das Feld zu bewegen und eine gewisse Leistung vom Antriebsmotor 38 abzunehmen. Der Vorgehensweise liegt eine Betriebsbedingung der Erntemaschine 10 zu Grunde, bei welcher sie eine gewisse durch den Bediener über den Fahrhebel 144 vorgegebene Geschwindigkeit erreicht hat und der Antriebsmotor 38 nicht bei voller Last, sondern unter Teillast arbeitet. In diesem Fall kann es sinnvoll sein, den Betriebspunkt zu verschieben, um einen geringeren Kraftstoffverbrauch zu erhalten, jedoch dieselbe Leistung des Antriebsmotors 38 aufrecht zu erhalten. Der optimale Punkt kann bestimmt werden, wenn die Kraftstoffverbrauchseigenschaften des Antriebsmotors 38 bekannt sind. Im Folgenden wird das Kennlinienfeld nach Figur 7 verwendet, in welchem auf der X-Achse die Drehzahl und auf der Y-Achse die Leistung aufgetragen sind. Die gepunkteten Linien stellen Linien gleichen spezifischen Kraftstoffverbrauches dar.

Der Bediener beaufschlagt die Steuerung 94 mit einer gewünschten Soll-Leistung des Antriebsmotors 38 und stellt eine gewünschte Vortriebsgeschwindigkeit mit dem Fahrhebel 144 ein, sodass die Steuerung 94 (solange nicht die Soll-Leistung überschritten wird) den Aktor 142 veranlasst, die Erntemaschine 10 mit der vom Sensor 146 erfassten Soll-Geschwindigkeit über das Feld zu bewegen. Solange die Soll-Leistung nicht erreicht wird, aktiviert die Steuerung 94 einen Energieeffizienzmodus. In diesem Energieeffizienzmodus erfasst die Steuerung 94 die Teillastbedingung und kommandiert der Motorsteuerung 158 einen neuen Betriebspunkt. Hierzu benötigt die Steuerung 94 die gegenwärtige Leistung (absolut oder als Anteil der Maximalleistung) und die derzeitige Drehzahl des Antriebsmotors und bestimmt, basierend auf diesen beiden Werten, den optimalen Betriebspunkt unter Verwendung des Kennlinienfeldes und des darin aufgezeigten, spezifischen Kraftstoffverbrauchs. Auf analoge Weise wird vorgegangen, wenn der Sollwert der Leistung erreicht wird, d.h. der Betriebspunkt des Antriebsmotors 38 wird auf eine geeignete Drehzahl mit minimalem spezifischen Kraftstoffverbrauch gelegt, wie in der Figur 7 gezeigt. Für jeden Sollwert der Leistung wird somit eine geeignete Drehzahl selbsttätig gefunden, die einen minimalen spezifischen Kraftstoffverbrauch bedeutet.

Wie in der Figur 7 gezeigt, ist es möglich beim Verschieben des Betriebspunkts einem optimalen Weg zu folgen, der seinerseits zu einem niedrigeren Kraftstoffverbrauch führt. Hierbei ist es auch möglich, die Leistung beispielsweise durch Drehzahlverminderung zu reduzieren, wenn diese zu einem verminderten Verbrauch führt. Dieser optimale Weg kann festgelegt werden, indem die Steuerung 94 wiederholt den Sollwert des Betriebspunkts in Bezug auf den aktuellen Betriebspunkt aktualisiert. Ein einfacher, aber effektiver Weg zur Bestimmung dieses Weges ist im negativen Gradientenfeld der Figur 8 gezeigt. Man geht somit entlang der Gradienten, die quer zu den (in Figur 7 gestrichelt gezeigten) Linien gleichen spezifischen Kraftstoffverbrauches in Richtung auf den optimalen Zielpunkt verlaufen. Dadurch wird der Betriebspunkt sukzessive zum nächsten, lokalen Minimum im Verbrauchskennlinienfeld gezogen.

Falls keine Gradienteninformation verfügbar sein sollte, kann man eine erschöpfende Suche nach einem Minimum in der Nachbarschaft des aktuellen Arbeitspunkts suchen, wie in der Figur 9 gezeigt wird.

Es sei noch angemerkt, dass die hier beschriebenen Funktionen der Steuerung 94 in die Motorsteuerung 158 oder die Regelschaltung 150 mit integriert werden könnten, insbesondere falls letztere schon auf einer Optimiertechnik basiert, wie einer modellbasierten vorhersagenden Kontrolle (s. EP 3 348 103 A1).

## Patentansprüche

1. Erntemaschine (10), umfassend:
einen Antriebsmotor (38), der über einen ersten Antriebsstrang mit Bodeneingriffsmitteln (14, 16) der Erntemaschine (10) und über einen zweiten Antriebsstrang mit Erntegutbearbeitungs- und/oder-fördermitteln der Erntemaschine (10) verbunden ist, und
eine Steuerung (94), die zur Kontrolle der Vortriebsgeschwindigkeit (V) der Erntemaschine (10) mit einem zur Verstellung des Übersetzungsverhältnisses des ersten Antriebsstrangs eingerichteten Aktor (142) verbunden ist,
wobei der Steuerung (94) vom Erntegutdurchsatz der Erntemaschine (10) abhängige Soll- und Istwerte zuführbar sind, basierend auf denen sie eingerichtet ist, den Aktor (142) im Sinne eines Minimierens des Unterschieds zwischen dem jeweiligen Soll- und Istwert anzusteuern,
**dadurch gekennzeichnet, dass** die Steuerung (94) eingerichtet ist, anhand der ihr zugeführten Soll- und Istwerte ein Beschleunigungssignal zu berechnen, das eine zum Minimieren des Unterschieds zwischen Soll- und Istwert geeignete Beschleunigung der Erntemaschine (10) repräsentiert, und basierend auf dem Beschleunigungssignal ein Stellsignal zur Ansteuerung des Aktors (142) zu bestimmen.

2. Erntemaschine (10) nach Anspruch 1, wobei die Steuerung (94) einen Integrierer (152) umfasst, dem das Beschleunigungssignal zuführbar ist und dessen Ausgangswert als Sollwert eines den Aktor (142) kontrollierenden Geschwindigkeitsreglers (154) dient, dessen Stellsignal an den Aktor (142) vorzugsweise durch eine durch einen Bediener vorgebbare maximale Geschwindigkeit der Erntemaschine (10) begrenzbar ist.

3. Erntemaschine (10) nach Anspruch 1 oder 2, wobei die Steuerung (94) betreibbar ist, das Beschleunigungssignal auf obere und untere Grenzwerte, die einer maximalen und minimalen Beschleunigung entsprechen und fest vorgegeben oder veränderbar sind, zu begrenzen.

4. Erntemaschine (10) nach einem der Ansprüche 1 bis 3, wobei die vom Erntegutdurchsatz abhängigen Soll- und Istwerte die Leistung und/oder Drehzahl des Antriebsmotors (38) betreffen.

5. Erntemaschine (10) nach Anspruch 4, wobei die Steuerung (94) betreibbar ist, ein erstes Beschleunigungssignal hinsichtlich der Leistung des Antriebsmotors (38) und ein zweites Beschleunigungssignal hinsichtlich der Drehzahl des Antriebsmotors (38) zu berechnen und beide Beschleunigungssignale insbesondere additiv zu einem einzigen Beschleunigungssignal zu kombinieren.

6. Erntemaschine (10) nach Anspruch 4 oder 5, wobei die Steuerung (94) betreibbar ist, das Beschleunigungssignal anhand der Differenz unterer und oberer Grenzwerte für die Leistung und/oder Drehzahl des Antriebsmotors (38) zu normieren.

7. Erntemaschine (10) nach Anspruch 5 oder 6, wobei die Steuerung (94) betreibbar ist, das erste und/oder zweite Beschleunigungssignal vor der Kombination mit dem anderen Beschleunigungssignal anhand einer vom Beschleunigungssignal abhängigen Kurve, die insbesondere logarithmisch oder exponentiell vom Betrag des Beschleunigungssignals abhängen kann, zu multiplizieren, um das betroffene Beschleunigungssignal stärker oder schwächer als das andere Beschleunigungssignal zu wichten.

8. Erntemaschine (10) nach einem der Ansprüche 4 bis 7, wobei der Sollwert für die Leistung und/oder Drehzahl des Antriebsmotors (38) mittels einer Bedienerschnittstelle (98) und/oder durch eine Automatik vorgebbar ist.

9. Erntemaschine (10) nach einem der vorhergehenden Ansprüche, wobei die Steuerung (94) eine Überwachungseinrichtung (160) umfasst, welche betreibbar ist, im Falle einer erkannten, sich kurzfristig einstellenden Unter- oder Überlast des Antriebsmotors (38) dem Beschleunigungssignal korrigierende Signale zu überlagern.

10. Erntemaschine (10) nach einem der Ansprüche 1 bis 9, **dadurch gekennzeichnet, dass** sie ein Feldhäcksler ist.

## Claims

1. Harvester (10), comprising:
a drive motor (38) that is connected to ground treatment means (14, 16) of the harvester (10) via a first drivetrain and to crop processing and/or conveying means of the harvester (10) via a second drivetrain, and
a controller (94) that is connected to an actuator (142), designed to adjust the transmission ratio of the first drivetrain, in order to control the propulsion speed (V) of the harvester (10),
wherein the controller (94) is able to be supplied with setpoint and actual values dependent on the crop throughput of the harvester (10), based on which values it is designed to actuate the actuator (142) in the direction of minimizing the difference between the respective setpoint and actual value,
**characterized in that** the controller (94) is designed, on the basis of the setpoint and actual values supplied thereto, to calculate an acceleration signal that represents an acceleration of the harvester (10) that is suitable for minimizing the difference between setpoint and actual value, and to determine a setting signal for actuating the actuator (142) based on the acceleration signal.

2. Harvester (10) according to Claim 1, wherein the controller (94) comprises an integrator (152) to which the acceleration signal is able to be supplied and whose output value serves as setpoint value for a speed regulator (154) controlling the actuator (142), the setting signal from the speed regulator to the actuator (142) preferably being able to be limited by a maximum speed of the harvester (10) as able to be predefined by a user.

3. Harvester (10) according to Claim 1 or 2, wherein the controller (94) is able to be operated so as to limit the acceleration signal to upper and lower limit values that correspond to a maximum and minimum acceleration and are fixedly predefined or changeable.

4. Harvester (10) according to one of Claims 1 to 3, wherein the setpoint and actual values dependent on the crop throughput concern the power and/or speed of the drive motor (38).

5. Harvester (10) according to Claim 4, wherein the controller (94) is able to be operated so as to calculate a first acceleration signal with regard to the power of the drive motor (38) and a second acceleration signal with regard to the speed of the drive motor (38) and to combine both acceleration signals, in particular additively, to form a single acceleration signal.

6. Harvester (10) according to Claim 4 or 5, wherein the controller (94) is able to be operated so as to normalize the acceleration signal on the basis of the difference between the lower and upper limit values for the power and/or speed of the drive motor (38).

7. Harvester (10) according to Claim 5 or 6, wherein the controller (94) is able to be operated so as to multiply the first and/or second acceleration signal, prior to combination with the acceleration signal, on the basis of a curve dependent on the acceleration signal, which curve may be dependent, in particular logarithmically or exponentially, on the absolute value of the acceleration signal, in order to weight the acceleration signal in question to a greater or lesser extent than the other acceleration signal.

8. Harvester (10) according to one of Claims 4 to 7, wherein the setpoint value for the power and/or speed of the drive motor (38) is able to be predefined by way of a user interface (98) and/or by a machine.

9. Harvester (10) according to one of the preceding claims, wherein the controller (94) comprises a monitoring apparatus (160) that is able to be operated so as to overlay corrective signals on the acceleration signal in the event of an identified short-term underload or overload of the drive motor (38).

10. Harvester (10) according to one of Claims 1 to 9, **characterized in that** it is a forage harvester.

## Revendications

1. Moissonneuse (10), comprenant :
un moteur d'entraînement (38) qui est relié par une première chaîne cinématique à des moyens de contact avec le sol (14, 16) de la moissonneuse (10) et par une deuxième chaîne cinématique à des moyens de traitement et/ou d'acheminement de produits récoltés de la moissonneuse (10), et
un dispositif de commande (94) qui, pour le contrôle de la vitesse d'avance (V) de la moissonneuse (10), est relié à un actionneur (142) conçu pour régler le rapport de transmission de la première chaîne cinématique,
des valeurs théoriques et réelles dépendant du débit de produits récoltés de la moissonneuse (10) pouvant être amenées au dispositif de commande (94), sur la base desquelles ledit dispositif est conçu pour piloter l'actionneur (142) en vue de minimiser la différence entre la valeur théorique et la valeur réelle respective,
**caractérisée en ce que** le dispositif de commande (94) est conçu pour calculer, à l'aide des valeurs théoriques et réelles qui lui sont amenées, un signal d'accélération qui représente une accélération de la moissonneuse (10) adaptée pour minimiser la différence entre la valeur théorique et la valeur réelle, et pour déterminer sur la base du signal d'accélération un signal de réglage pour piloter l'actionneur (142).

2. Moissonneuse (10) selon la revendication 1, dans laquelle le dispositif de commande (94) comprend un intégrateur (152) auquel le signal d'accélération peut être amené et dont la valeur de sortie sert de valeur théorique d'un régulateur de vitesse (154) contrôlant l'actionneur (142) et dont le signal de réglage destiné à l'actionneur (142) peut être limité de préférence par une vitesse maximale de la moissonneuse (10), prédéfinissable par un opérateur.

3. Moissonneuse (10) selon la revendication 1 ou 2, dans laquelle le dispositif de commande (94) peut fonctionner pour limiter le signal d'accélération à des valeurs limites supérieures et inférieures qui correspondent à une accélération maximale et minimale et sont prédéfinies de manière fixe ou sont variables.

4. Moissonneuse (10) selon l'une quelconque des revendications 1 à 3, dans laquelle les valeurs théoriques et réelles dépendant du débit de produits récoltés concernent la puissance et/ou la vitesse de rotation du moteur d'entraînement (38).

5. Moissonneuse (10) selon la revendication 4, dans laquelle le dispositif de commande (94) peut fonctionner pour calculer un premier signal d'accélération concernant la puissance du moteur d'entraînement (38) et un deuxième signal d'accélération concernant la vitesse de rotation du moteur d'entraînement (38) et pour combiner les deux signaux d'accélération en particulier de manière additive en un seul signal d'accélération.

6. Moissonneuse (10) selon la revendication 4 ou 5, dans laquelle le dispositif de commande (94) peut fonctionner pour réduire le signal d'accélération à l'aide de la différence entre des valeurs limites inférieures et supérieures pour la puissance et/ou la vitesse de rotation du moteur d'entraînement (38).

7. Moissonneuse (10) selon la revendication 5 ou 6, dans laquelle le dispositif de commande (94) peut fonctionner pour multiplier le premier et/ou le deuxième signal d'accélération avant la combinaison avec l'autre signal d'accélération à l'aide d'une courbe dépendant du signal d'accélération et qui peut dépendre de manière en particulier logarithmique ou exponentielle de la grandeur du signal d'accélération afin de donner plus ou moins de poids au signal d'accélération pertinent qu'à l'autre signal d'accélération.

8. Moissonneuse (10) selon l'une quelconque des revendications 4 à 7, dans laquelle la valeur théorique pour la puissance et/ou la vitesse de rotation du moteur d'entraînement (38) peut être prédéfinie au moyen d'une interface opérateur (98) et/ou par un système automatique.

9. Moissonneuse (10) selon l'une quelconque des revendications précédentes, dans laquelle le dispositif de commande (94) comprend un dispositif de surveillance (160) qui peut fonctionner pour superposer des signaux correcteurs au signal d'accélération en cas de sous-charge ou de surcharge identifiée du moteur d'entraînement (38) survenant à court terme.

10. Moissonneuse (10) selon l'une quelconque des revendications 1 à 9, **caractérisée en ce qu'**il s'agit d'une faucheuse-hacheuse.
